(19) Europäisches Patentamt
European Patent Office
Office européen des brevets

(11) **EP 3 246 671 B1**

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(51) Int Cl.:
*G01F 23/26* (2006.01) *G01F 1/00* (2006.01)
*G01N 27/22* (2006.01)

(21) Anmeldenummer: **17162260.8**

(22) Anmeldetag: **22.03.2017**

(54) **KAPAZITIVER SENSOR UND VERFAHREN ZUR BESTIMMUNG DER PERMITTIVITÄTSVERTEILUNG IN EINEM OBJEKT**

CAPACITIVE SENSOR AND METHOD FOR DETERMINING THE PERMITTIVITY DISTRIBUTION IN AN OBJECT

CAPTEUR CAPACITIF ET PROCÉDÉ DE DÉTERMINATION DE LA RÉPARTITION DE PERMITTIVITÉ DANS UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2016 DE 102016109102**

(43) Veröffentlichungstag der Anmeldung:
**22.11.2017 Patentblatt 2017/47**

(73) Patentinhaber: **Sick AG**
**79183 Waldkirch (DE)**

(72) Erfinder: **Kronauge, Dr. Matthias**
**22761 Hamburg (DE)**

(56) Entgegenhaltungen:
EP-A1- 1 521 066 WO-A1-2004/008084
DE-C1- 19 736 178 US-A1- 2014 361 793

- **HUANG S M ET AL: "DESIGN OF SENSOR ELECTRONICS FOR ELECTRICAL CAPACITANCE TOMOGRAPHY", IEE PROCEEDINGS G. ELECTRONIC CIRCUITS & SYSTEMS, INSTITUTION OF ELECTRICAL ENGINEERS. STEVENAGE, GB, vol. 139, no. 1, 1 February 1992 (1992-02-01), pages 83-88, XP000293220, ISSN: 0622-0039**

**Beschreibung**

Die Erfindung betrifft einen kapazitiven Sensor und ein Verfahren zur Bestimmung der Permittivitätsverteilung in einem Objekt nach dem Oberbegriff von Anspruch 1 beziehungsweise 8.

Für die Durchflussmessung, etwa zur Bestimmung des Gasvolumens pro Zeiteinheit in einer Pipeline, werden diverse Messverfahren eingesetzt. Ein häufig eingesetztes Verfahren basiert auf der Messung der Laufzeitdifferenz von mit und gegen die Strömung ausgesandtem Ultraschall. Die daraus resultierende Strömungsgeschwindigkeit wird mit dem Rohrquerschnitt zur Durchflussmenge verrechnet. Befindet sich außer dem geförderten Gas auch Flüssigkeit wie Kondenswasser in der Pipeline, so wird der effektive gasführende Querschnitt durch die Flüssigkeit verringert, und dies resultiert in einem entsprechenden Fehler bei der Bestimmung des Gasvolumenstroms.

Es ist deshalb wünschenswert, das Verhältnis von Gas- zu Wasseranteil am Rohrquerschnitt zu ermitteln. Eine für die Unterscheidung von Gas und Wasser geeignete Materialeigenschaft ist die Permittivität, häufig auch als Dielektrizitätskonstante bezeichnet, denn es gilt $\varepsilon_r(Wasser) \approx 80$ und $\varepsilon_r(Gas) \approx 1$.

Ein bekanntes Verfahren zur Bestimmung der Permittivitätsverteilung, das auch über einem Rohrquerschnitt verwendet werden kann, ist die kapazitive Tomographie (ECT, Electrical Capacitance Tomography). Dazu werden als Kondensatorplatten dienende Elektroden rundherum auf der Rohrinnenwand angebracht, wobei je nach Medium eine elektrische Trennung zum Innenraum durch ein Dielektrikum vorgesehen ist. Jeweils zwei dieser Elektroden werden zu einer Kapazität zusammengefasst und vermessen.

So entsteht eine Kapazitätsmatrix, aus der die zweidimensionale Verteilung der Permittivität über dem Rohrquerschnitt berechnet werden kann.

Um die einzelnen Kapazitäten zu bestimmen, wird herkömmlich der Ladestrom oder der Verlauf der Kondensatorspannung über eine Operationsverstärkerschaltung gemessen. Alternativ wird ein hochfrequentes Signal an die Kapazität angelegt und in einer späteren Signalauswertung aus der Dämpfung bei der gewählten Frequenz eine Aussage über den Wert der Kapazität getroffen. Dazu muss jeweils ein analoges Signal von der Elektrode weg geführt und dann von einem Analog-Digital-Wandler umgesetzt und anschließend ausgewertet werden. Gerade der analoge Signalweg ist anfällig für Störungen und führt zu einem Verlust an Empfindlichkeit. Außerdem sind solche Lösungen relativ teuer und aufwändig.

Es ist ferner bekannt, eine einzelne Kapazität mit Hilfe einer astabilen Kippschaltung zu vermessen. Das lässt sich aber zunächst nicht auf eine Vielzahl von Elektroden übertragen, da die Elektroden gegenseitig die Messung stören, und ist daher so nicht für eine kapazitive Tomographie nutzbar.

Die EP 1 521 066 A1 offenbart einen kapazitiven Füllstandsensor, in dem eine Reihe von Messelektroden zusammen mit einer leitfähigen Oberfläche Messkondensatoren bilden. Die Messelektroden können über ein Schaltmittel wahlweise mit einer Multivibratorschaltung verschaltet werden.

In der DE 197 36 178 C1 wird eine Vorrichtung zur Erfassung von Phasengrenzen in Fluiden beschrieben. Dazu werden eine oder mehrere Kondensatoranordnungen mit je zwei halbringförmigen Flächensegmenten um den Strömungskanal herum angeordnet. Die jeweiligen Kapazitäten einer Kondensatoranordnung werden in einer der vorgestellten Auswertungsweisen mit einer Multivibratorschaltung gemessen.

Die US 2014/0361793 A1 offenbart ein System für kapazitive Tomographie, dass eine Vielzahl von Sende- und Empfangselektroden aufweist. Ein sendeseitiger Multiplexer wählt jeweils eine anzuregende Sendelektrode aus, während die übrigen Sendeelektroden auf Masse gelegt werden. Ein empfangsseitiger Multiplexer liest jeweils eine der Empfangselektroden aus.

Aus Huang, S. M., et al. "Design of sensor electronics for electrical capacitance tomography." IEE Proceedings G (Circuits, Devices and Systems) 139.1 (1992): 83-88 ist eine Schaltungsanordnung mit zwölf Elektroden bekannt. Die erste Elektrode kann wahlweise als Sendeelektrode fungieren oder auf Masse gelegt werden, die zwölfte Elektrode ist stets Empfangselektrode. Die übrigen Elektroden fungieren wahlweise als Sende- oder Empfangselektrode. Der Messzyklus sieht vor, dass anfangs die erste Elektrode als Sendeelektrode geschaltet ist, während die übrigen Elektroden parallel als Empfangselektroden messen. Dann wird die zweite Elektrode zur Sendeelektrode, die erste Elektrode auf Masse gelegt, und die übrigen Elektroden messen parallel als Empfangselektrode. Im elften und letzten Messabschnitt dient nur noch die elfte Elektrode als Sendeelektrode und die zwölfte als Empfangselektrode.

Daher ist Aufgabe der Erfindung, die Bestimmung einer Permittivitätsverteilung zu verbessern.

Diese Aufgabe wird durch einen kapazitiven Sensor und ein Verfahren zur Bestimmung der Permittivitätsverteilung in einem Objekt nach Anspruch 1 beziehungsweise 8 gelöst. Der Sensor arbeitet nach dem einleitend erläuterten Prinzip der kapazitiven Tomographie (ECT) und weist dazu mehrere Elektroden auf, die an dem Objekt angebracht werden. Zwischen Elektroden, beispielsweise unterschiedlichen Paaren von Elektroden, misst eine Messeinheit mit einer astabilen Kippstufe Kapazitäten. Dabei erzeugt die astabile Kippschaltung eine Art Schwingung, idealisiert eine Rechteckspannung, aus deren Periode beispielsweise durch Vergleich mit einer intern erzeugten Rechteckspannung bekannter Periode die Kapazität ermittelt wird. Die Kapazitäten ermöglichen dann die Bestimmung der Permittivitätsverteilung. Dabei geht die Erfindung von dem Grundgedanken aus, die Elektroden mit Hilfe eines Schalters, insbesondere eines analogen Signalschalters, unterschiedlich zu verbinden, um eine jeweilige Kapazitätsmessung zu ermöglichen. Insbesondere sollen jeweils zwei Elektroden ausgewählt werden können, um sie zu einer Messkapazität zu verbinden und mit der astabilen Kippstufe zu vermessen. Der Schalter verbindet wahlweise mit Masse, einer Versorgungsspannung oder der astabilen Kippstufe, je nachdem, welche Rolle die derart verbundene Elektrode in einer jeweiligen Kapazitätsmessung spielen soll. Dabei ist der Begriff der Versorgungsspannung sehr weit zu verstehen und bezeichnet im Grunde ganz allgemein ein von Masse verschiedenes elektrisches Potential. Dieses Potential muss folglich nicht notwendig der Versorgungsspannung des Sensors entsprechen, wird aber praktisch vorzugsweise zumindest daraus abgeleitet und ist deshalb vereinfachend so bezeichnet.

Die Erfindung hat den Vorteil, dass der Kapazitätswert unmittelbar an der als Kondensatorplatte fungierenden Elektrode in einen digitalen Wert umgewandelt werden kann, so dass die Messung sehr robust gegen Störeinflüsse wird. Da der über die astabile Kippstufe erfasste Messwert direkt proportional zur Kapazität ist, kann die Signalverarbeitung sehr einfach bleiben. Dabei ist ein sehr einfacher Schaltungsaufbau möglich, der sogar ohne einen Analog/Digitalwandler auskommen kann.

Gemäß der Erfindung ist die Messeinheit dafür ausgebildet, über den mindestens einen Schalter jede der Elektroden wahlweise mit Masse, einer Versorgungsspannung oder der astabilen Kippstufe zu verbinden. Damit kann jede Elektrode auch jede Rolle bei einer Kapazitätsmessung einnehmen. Erreicht werden kann dies durch einen komplexeren Schalter, der für mehrere oder gar alle Elektroden zuständig ist, oder durch eine Vielzahl einfacherer Schalter.

Die Messeinheit weist bevorzugt je einen Schalter für jede der Elektroden auf. Damit genügen sehr einfache Schalter, um jede Elektrode in jeder relevanten Weise verbinden zu können.

Die Messeinheit weist bevorzugt eine astabile Kippstufe für jede Elektrode auf. Dies ermöglicht eine besonders einfache Verschaltung, bei der jede Elektrode bei Bedarf mit ihrer eigenen astabilen Kippstufe verbunden wird. Besonders bevorzugt ist eine Kombination aus einem Schalter und einer astabilen Kippstufe je Elektrode. Dann entsteht eine Vielzahl gleichwertiger und gleich aufgebauter Zweige, die mit sehr einfachen Bauteilen auskommen.

Gemäß der Erfindung ist die Messeinheit dafür ausgebildet, eine Messkapazität aus einer ersten Elektrode und einer zweiten Elektroden zu bilden, indem die erste Elektrode mit der Versorgungsspannung, die zweite Elektrode mit der astabilen Kippstufe und alle übrigen Elektroden, mindestens eine, mit Masse verbunden werden. Dies ist eine besonders geeignete Ausnutzung der Verbindungsmöglichkeiten der Elektroden. Die erste und zweite Elektrode werden als Messkapazität ausgewählt. Die unbeteiligten Elektroden werden auf Masse gelegt. Damit kann zwischen der Kapazität gegen Masse und der eigentlichen Messgröße, nämlich der Messkapazität zur Versorgungsspannung, zuverlässig unterschieden werden.

Gemäß der Erfindung ist die Auswertungseinheit dafür ausgebildet, mit Hilfe der Messeinheit nacheinander Messkapazitäten aus verschiedenen Paaren von Elektroden zu bilden. Somit werden sequentiell die möglichen aus den Elektroden zusammenschaltbaren Messkapazitäten vermessen, um möglichst viele Informationen über die Permittivitätsverteilung zu erfassen. Besonders bevorzugt werden dabei alle denkbaren Permutationen gebildet, also alle Paare von Elektroden nacheinander zu Messkapazitäten verschaltet. Prinzipiell kann mit jedem Paar zweimal vermessen werden, indem die beteiligten Elektroden ihre Verbindung mit der Versorgungsspannung beziehungsweise der astabilen Kippstufe tauschen. Dadurch wird aber die Anzahl der Messungen verdoppelt und so der Messzyklus verlängert. Es besteht also die Wahl, auf die an sich redundanten Messungen zu verzichten oder sie beispielsweise durch Mittelwertbildung für ein noch verlässlicheres Messergebnis durchzuführen.

Das Objekt ist vorzugsweise eine Rohrleitung mit einem darin strömenden Fluid. Sofern die Rohrleitung keine zu große Abschirmwirkung hat, können die Elektroden außen angebracht und der Einfluss der Rohrleitung beispielsweise durch Kalibration berücksichtigt werden. Alternativ befinden sich die Elektroden in der Rohrwandung oder innen, wobei dann aber eventuell je nach Medium eine schützende dielektrische Schicht vorgesehen ist.

Die Auswertungseinheit ist bevorzugt dafür ausgebildet, aus der Permittivitätsverteilung unterschiedliche Phasen des strömenden Fluids zu bestimmen. Dies ist beispielsweise in der einleitend diskutierten Anwendung bei der Durchflussmessung nützlich, um einen Messfehler durch Flüssigkeitsanteile in einem strömenden Gas zu korrigieren.

Die Auswertungseinheit ist bevorzugt dafür ausgebildet, mindestens zwei der folgenden Zustände zu unterscheiden: das Fluid hat keinen Flüssigkeitsanteil, der Flüssigkeitsanteil ist nebelartig verteilt, der Flüssigkeitsanteil strömt am Boden oder der Flüssigkeitsanteil ist an die Innenwand der Rohrleitung gepresst. Innerhalb des letzten Zustands kann man nochmals zwischen einem Flüssigkeitsanteil unterscheiden, der am Boden strömt, jedoch durch den Gasdruck u-förmig ausgebuchtet ist, und einem Flüssigkeitsanteil überall an der Innenwand mit innen strömendem Gas. Vorzugsweise werden alle diese Zustände unterschieden. Das ermöglicht dann unter anderem eine vereinfachte Fehlerkorrektur, weil jeder Zustand spezifische Auswirkungen auf den effektiven Rohrquerschnitt hat, der noch für das strömende Gas zur Verfügung steht.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1     eine schematische Darstellung einer Rohrleitung mit darin strömendem Gas mit flüssiger Phase und einer kapazitiven Messung mit zwei Elektroden;

Fig. 2     eine mögliche Beschaltung der beiden Elektroden in Figur 1 für eine Kapazitätsmessung mit einer astabilen Kippstufe;

Fig. 3     eine schematische Darstellung einer Rohrleitung ähnlich Figur 1, jedoch mit zusätzlichen, hier beispielsweise acht Elektroden;

Fig. 4     eine mögliche Beschaltung einer der Elektroden in Figur 3, mit der die Elektrode wahlweise mit Masse, Versorgungsspannung oder eine astabilen Kippstufe verbunden wird;

Fig. 5     eine Schaltungsanordnung aus mehreren Schaltungszweigen gemäß Figur 4 zur Kapazitätsmessung an Elektrodenpaaren, die aus hier beispielsweise vier Elektroden gebildet werden;

Fig. 6     verschiedene mögliche Strömungsprofile eines Flüssigkeitsanteils in einem Gas; und

Fig. 7     ein Beispiel einer resultierenden Permittivitätsverteilung.

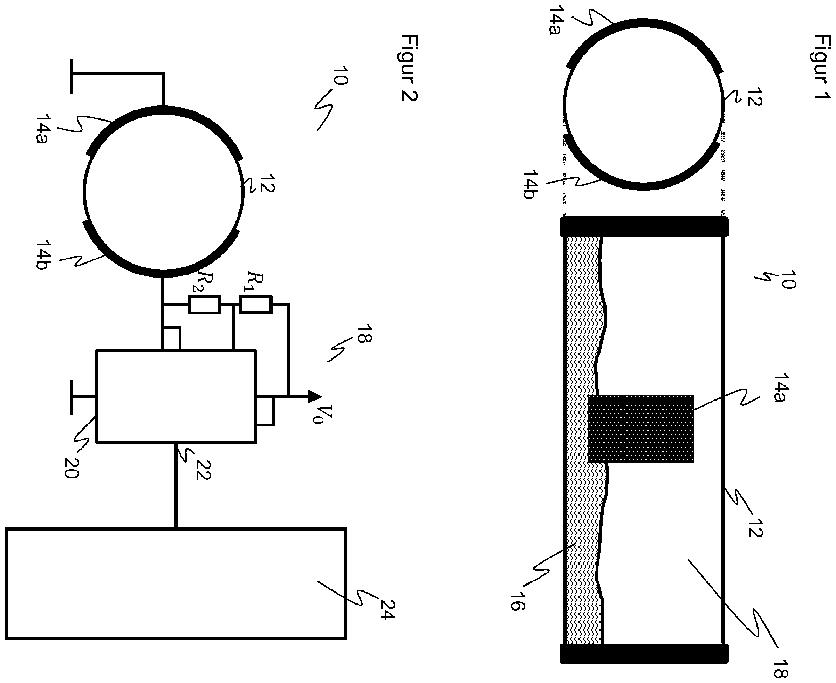

Figur 1 zeigt sehr schematisch links in einem Querschnitt und rechts in einem Längsschnitt einen kapazitiven Sensor 10 an einer Rohrleitung 12 zur Bestimmung der Permittivitätsverteilung über einen Querschnitt der Rohrleitung 12. Tatsächlich dargestellt sind in Figur 1 von dem Sensor 10 nur zwei Elektroden 14a-b, um deren Positionierung zu illustrieren. Die Elektroden 14a-b können mit einer Isolationsschicht beziehungsweise einer auf Massepotential gelegten leitenden Schicht gegen mechanische und elektromagnetische Einflüsse geschützt werden.

Ein konkretes Ziel der Messung mit dem Sensor 10 kann sein, einen Flüssigkeitsanteil 16 eines in der Rohrleitung 12 strömenden Gases 18 zu erfassen. Andere mehrphasige Strömungen sind ebenso denkbar, wobei Wasser und Gas sich wegen des großen Unterschieds in der Dielektrizitätskonstante bei $\varepsilon_r(Wasser) \approx 80$ und $\varepsilon_r(Gas) \approx 1$ besonders gut trennen lassen. Bei Öl und Gas beispielsweise mit $\varepsilon_r(Öl) \approx 2,5$ liegt dies wesentlich näher zusammen.

Die Erfindung ist nicht auf das Beispiel einer tomografischen Bestimmung des Flüssigkeitsanteils 16 in einer das Gas 18 führenden Rohrleitung 12 aus Kapazitätsmessungen beschränkt. Abgesehen von den bereits diskutierten anderen Zusammensetzungen des Mediums in der Rohrleitung kann überhaupt an die Stelle der Rohrleitung 12 ein anderes Objekt treten, um eine Permittivitätsverteilung zu bestimmen, beispielsweise um in Kombinationen von unterschiedlichen Materialien deren Anteile beziehungsweise örtliche Verteilung zu bestimmen.

Wie in Figur 2 anhand einer möglichen Beschaltung der beiden Elektroden 14a-b gezeigt, kann für die einfache Elektrodenanordnung der Figur 1 eine entsprechend einfache Schaltung zur Kapazitätsmessung verwendet werden. Sie basiert auf einer astabilen Kippstufe 18, die beispielsweise über einen Timer-Baustein 20 wie den NE555 realisiert sein kann und die mit einer der Elektroden 14b verbunden ist. Die andere Elektrode 14a wird auf Masse gelegt. Die astabile Kippstufe 18 erzeugt an einem Ausgang 22 eine periodische Spannung, insbesondere eine Rechteckspannung, mit einer zu der Kapazität zwischen R2 und Masse direkt proportionalen Periodendauer.

Der Ausgang 22 ist mit einer Auswertungseinheit 24 verbunden, die beispielsweise auf einem Mikrocontroller implementiert ist und die somit das periodische Messsignal erhält. Die Auswertungseinheit 24 bestimmt aus dem Messsignal die von den Elektroden 14a-b gebildeten Messkapazitäten beispielsweise durch Abgleich mit einem intern in der Auswertungseinheit 24 erzeugten Rechtecksignals mit hoher Auflösung.

Solange sich nur ein glatter Wasserspiegel am Boden der Rohrleitung 12 bildet, genügt diese einfache Messung, um den Flüssigkeitsanteil 16 zu bestimmen. In der Praxis kann aber der Flüssigkeitsanteil 16 völlig anders verteilt sein, wobei mögliche Einflussfaktoren ein hoher Druck in der Rohrleitung, eine hohe Strömungsgeschwindigkeit des Gases 18 oder eine nicht waagerechte Montage der Rohrleitung 12 sein können.

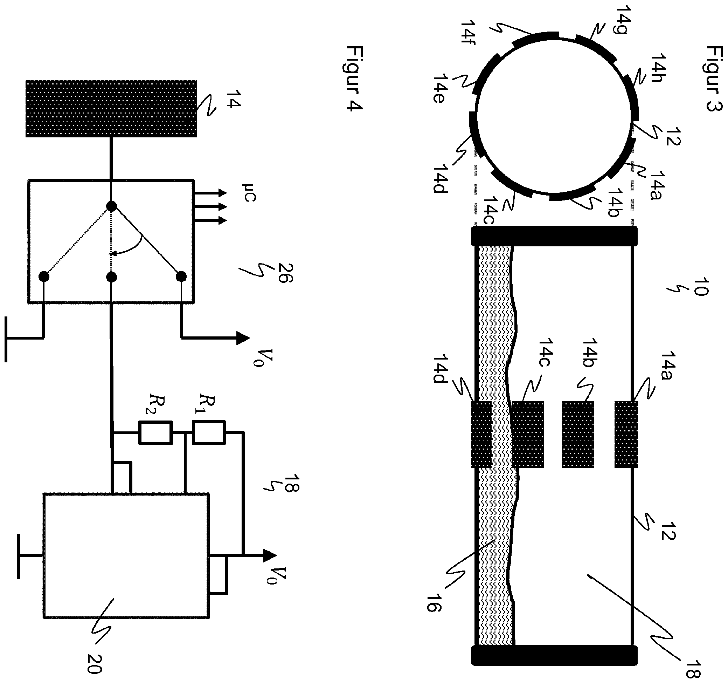

Figur 3 zeigt in einer Ansicht ähnlich der Figur 1 eine Verteilung von zusätzlichen Elektroden, hier beispielhaft acht Elektroden 14a-h in gleichmäßiger Verteilung über den Umfang der Rohrleitung 12. Dadurch kann auch eine komplexere Permittivitätsverteilung und damit beispielsweise die genauere Verteilung eines nicht glatt am Boden befindlichen Flüssigkeitsanteils 16 gemessen werden.

Denn eine Anzahl von $N_P$ Elektroden 14a-h kann nicht nur zu einer einzigen Messkapazität verbunden werden wie gemäß den Figuren 1 und 2, sondern es gibt hier $N_C = N_P \cdot (N_P - 1)/2$ mögliche Paare. Im Beispiel der Figur 3 mit acht Elektroden 14a-h ergibt sich, wenn die Kapazitäten aller Paare vermessen werden, die folgende Kapazitätsmatrix:

$$C = \begin{pmatrix} c_{1,1} & c_{1,2} & c_{1,3} & c_{1,4} & c_{1,5} & c_{1,6} & c_{1,7} & c_{1,8} \\ c_{2,1} & c_{2,2} & c_{2,3} & c_{2,4} & c_{2,5} & c_{2,6} & c_{2,7} & c_{2,8} \\ c_{3,1} & c_{3,2} & c_{3,3} & c_{3,4} & c_{3,5} & c_{3,6} & c_{3,7} & c_{3,8} \\ c_{4,1} & c_{4,2} & c_{4,3} & c_{4,4} & c_{4,5} & c_{4,6} & c_{4,7} & c_{4,8} \\ c_{5,1} & c_{5,2} & c_{5,3} & c_{5,4} & c_{5,5} & c_{5,6} & c_{5,7} & c_{5,8} \\ c_{6,1} & c_{6,2} & c_{6,3} & c_{6,4} & c_{6,5} & c_{6,6} & c_{6,7} & c_{6,8} \\ c_{7,1} & c_{7,2} & c_{7,3} & c_{7,4} & c_{7,5} & c_{7,6} & c_{7,7} & c_{7,8} \\ c_{8,1} & c_{8,2} & c_{8,3} & c_{8,4} & c_{8,5} & c_{8,6} & c_{8,7} & c_{8,8} \end{pmatrix}$$

Interessant ist nur eine Dreiecksmatrix ober- oder gleichwertig unterhalb der Diagonalen. Die Diagonale selbst repräsentiert die Kombination einer Elektrode 14a-h mit sich selbst, was keine sinnvolle Kapazitätsmessung zulässt. Die erneute Messung mit einem Elektrodenpaar bei vertauschter Reihenfolge ergibt zumindest theoretisch dieselbe Kapazität, dennoch können solche Messungen alternativ auch beispielsweise mit einer Mittelung durchgeführt werden. Besonders relevant für die Verteilung eines Flüssigkeitsanteils 16 sind die Einträge der ersten Nebendiagonalen sowie der Wert $C_{1,8}$. Es ist also denkbar, die Messzyklen zu verkürzen, indem nur diese Werte bestimmt werden. Die weiteren Einträge enthalten aber ebenfalls verwertbare Informationen über die genaue Verteilung einer Flüssigkeitsströmung.

Die einfache Schaltung nach Figur 2 ist jedoch für die Messung mit verschiedenen Paaren der mehreren Elektroden 14a-h nach Figur 3 nicht mehr geeignet. In einem Sensor 10 mit mehr als zwei Elektroden 14a-h sollten alle nicht an der Messung beteiligten Elektroden 14a-h auf Masse gelegt werden, da sie sonst Störkapazitäten bilden. Außerdem ist vorzugsweise eine Abschirmung nach außen vorgesehen, insbesondere die Rohrwand selbst oder eine leitende äußere Schicht, die zum Schutz vor Störeinflüssen ebenfalls auf Masse liegt. Würde man nun einfach eine Messkapazität bilden, indem die erste Elektrode 14a-h des ausgewählten Paares mit der astabilen Kippstufe 18 verbunden wird, insbesondere mit dem Trigger/Threshold-Eingang eines NE555, und die zweite Elektrode 14a-h auf Masse liegt, so wird nicht die Kapazität zwischen diesen beiden Elektroden 14a-h gemessen, sondern von der ersten Elektrode 14a-h zu allen anderen und der Abschirmung. Das ist jedoch nicht die gesuchte Messgröße.

Figur 4 zeigt zunächst vereinfacht nur für eine Elektrode 14 eine Erweiterung der Schaltung mit einer astabilen Kippstufe 18, die dieses Problem löst. Dazu wird zwischen die Elektrode 14 und die astabile Kippstufe 18 ein Schalter 26 eingefügt, insbesondere ein digital steuerbarer Schalter für analoge Signale, wie beispielsweise der Analogschalter-Baustein 4066. Der Schalter 26 ermöglicht den Wechsel zwischen drei Schaltzuständen, bei denen die Elektrode 14 wahlweise mit Masse, mit einer Versorgungsspannung beziehungsweise einem Versorgungspotential $V_0$ oder mit der astabilen Kippstufe 18 verbunden ist. Ein Wechsel der Schaltzustände wird von der Auswertungseinheit 24 ausgelöst, die hier mit μC bezeichnet ist.

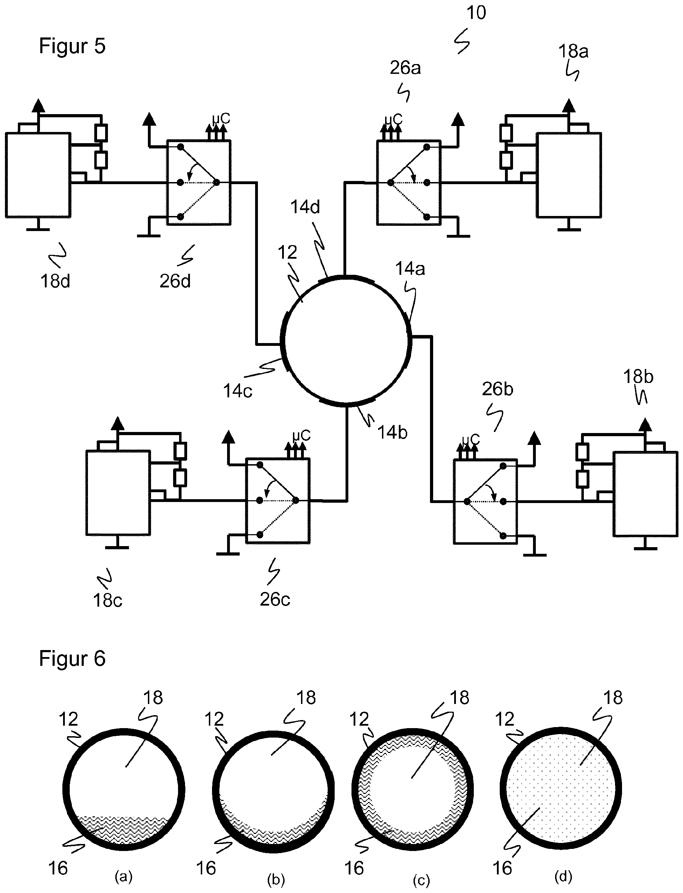

Figur 5 zeigt ein Beispiel für eine Beschaltung aller Elektroden 14a-d. Die Schaltungsanordnung nach Figur 4 ist hier entsprechend der Anzahl von Elektroden 14a-d vervielfacht, und jeder Elektrode 14a-d ist ein identisch aufgebauter Zweig mit jeweils einer astabilen Kippstufe 18a-d und einem Schalter 26a-d zugeordnet. Anders als in Figur 3 sind hier der Übersichtlichkeit halber nur vier Elektroden 14a-d vorgesehen, wobei diese Anzahl natürlich je nach Ausführungsform des Sensors 10 variieren kann.

Mit Hilfe der Schalter 26a-d kann nun jedes beliebige Paar von Elektroden 14a-d ausgewählt und zu einer Messkapazität kombiniert werden. Dazu wird die erste Elektrode 14a-d des Paares mit der zugehörigen astabilen Kippstufe 18a-d und die zweite Elektrode 14a-d des Paares mit der Versorgungsspannung $V_0$ verbunden und dementsprechend auf $V_0$ aufgeladen. Die übrigen Elektroden 14a-d werden mit Masse verbunden. Gemessen wird auf diese Weise die Überlagerung der unvermeidlichen Kapazität gegen Masse und der gesuchten Kapazität zu der mit der Versorgungsspannung $V_0$ verbundenen Elektrode 14a-d. So wird es möglich, mit der astabilen Kippstufe 18a-d die Kapazität zwischen zwei beliebigen Elektroden 14a-d trotz Anwesenheit der weiteren Elektroden 14a-d zu messen.

Entgegen der Darstellung in Figur 5 muss nicht zwingend jeder Elektrode 14a-d ein Zweig mit einem Schalter 26a-d und einer astabilen Kippstufe 18a-d zugeordnet sein, aber dies erlaubt die volle Flexibilität, beliebige Paare von Elektroden 14a-d zu Messkapazitäten zu verbinden. Weiterhin ist auch nicht erforderlich, alle Zweige identisch aufzubauen, aber dies reduziert die Komplexität der Schaltung. Es wurde jeweils der Baustein NE555 als Beispiel für den Timer-Baustein 20 genannt. Alternativ kann die astabile Kippstufe 18a-d auf beliebige andere Weise realisiert werden. Insbesondere eignet sich hier die CMOS-Variante LMC555, die einen geringeren Stromverbrauch aufweist und deshalb beispielsweise bei Batteriebetrieb Vorteile zeigt. Ähnlich wurde der Analogschalter-Baustein 4066 als Beispiel für den Schalter 26a-d genannt. Auch hier kommt es nicht auf den konkreten Baustein, sondern die Funktion an, in diesem Fall die Möglichkeit, Elektroden 14a-d wahlweise mit Masse, mit der Versorgungsspannung $V_0$ oder mit der astabilen Kippstufe 18a-d zu verbinden. Das kann beispielsweise auch mit einem komplexeren Schalter geschehen, der für mehrere Elektroden 14a-d zuständig ist und auch unter Umständen dieselbe astabile Kippstufe 18a-d wahlweise mit einer von mehreren Elektroden 14a-d verbinden kann.

Ein beispielhafter Messzyklus mit dem erfindungsgemäßen Sensor 10 beginnt damit, dass die Auswertungseinheit 26 sämtliche Elektroden 14a-d mit Hilfe der Schalter 26a-d auf Masse legt. Anschließend legt die Auswertungseinheit 26 die erste Elektrode 14a über den Schalter 26a auf die Versorgungsspannung $V_0$, verbindet die zweite Elektrode 14b über den Schalter 26b mit der astabilen Kippstufe 18b und den Ausgang der astabilen Kippstufe 18b beispielsweise über einen Demultiplexer an einen Timer/Counter-Eingang der Auswertungseinheit 26. Die astabile Kippstufe 18b erzeugt in dieser Verschaltung ein Rechtecksignal mit einer Periodendauer, die proportional zu der somit aus erster Elektrode 14a und zweiter Elektrode 14b gebildeten Messkapazität ist. Die Auswertungseinheit 26 bestimmt die Periodendauer beispielsweise durch Abgleich mit einem intern erzeugten Rechtecksignal bekannter Periodendauer. Damit ist die zu messende Periodendauer bekannt, welche bis auf durch die Widerstände $R_1$, $R_2$ bekannte Proportionalitätsfaktoren der Kapazität $C_{1,2}$ entspricht. Dieser Vorgang wird für alle Kombinationsmöglichkeiten von Elektrodenpaaren 14a-d wiederholt oder alternativ nur für eine Auswahl davon, etwa um nur die Kapazitäten der Nebendiagonalen und der rechten oberen Ecke der oben angegebenen Kapazitätsmatrix zu messen. Die Reihenfolge der Messungen kann variiert werden, und es sind auch Mehrfachmessungen mit Mittelwertbildung denkbar.

Anschließend kann aus der Kapazitätsmatrix die zweidimensionale Verteilung des Flüssigkeitsanteils über dem Querschnitt der Rohrleitung 12 berechnet werden. Dabei fließt auch ein Sensormodell ein, welches durch eine theoretische Berechnung der Verteilung des elektrischen Feldes im Inneren der Rohrleitung 12 bei bekannten Positionen und Geometrien der Elektroden 14a-d bestimmt ist.

Es ist denkbar, die Verteilung des Flüssigkeitsanteils 16 unterstützend oder alternativ in Klassen einzuteilen. Figur 6 illustriert mehrere denkbare Formen des Flüssigkeitsanteils 16, verursacht beispielsweise durch Druck, Gasgeschwindigkeit und Anordnung der Rohrleitung 12. Im Fall (a) bildet sich ein glatter Flüssigkeitsanteil 16 im unteren Bereich des Rohrquerschnitts, im Fall (b) wird ein Flüssigkeitsanteil 16 im unteren Bereich durch den Druck des darüber strömenden Gases 18 u-förmig seitlich nach oben gedrückt, im Fall (c) ist dieser Druck so stark, dass der Flüssigkeitsanteil 16 eine geschlossene Strömung entlang der Rohrinnenwand bildet, und im Fall (d) vermischt sich der Flüssigkeitsanteil 16 mit dem Gas 18 in einer Art Nebel. Diese vier Fälle sind durch die beschriebene tomographische Vermessung der Permittivitätsverteilung zuverlässig unterscheidbar.

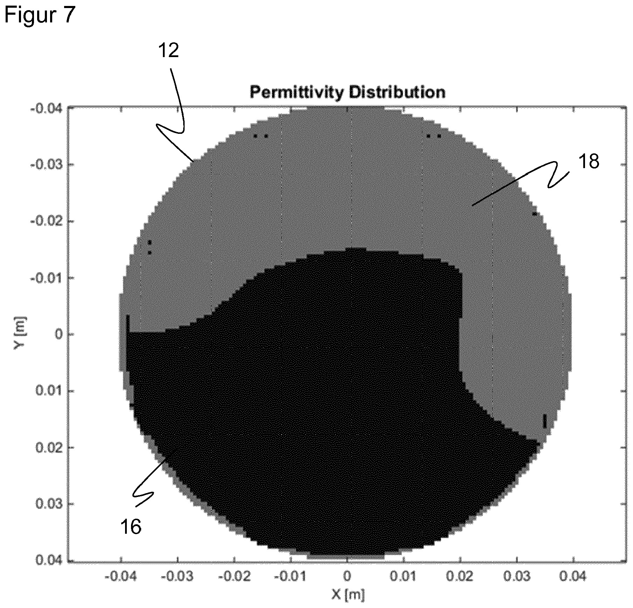

Figur 7 zeigt abschließend das Ergebnis einer Beispielmessung bei einer etwa zur Hälfte von einem Flüssigkeitsanteil 16 gefüllten Rohrleitung 12. Der Flüssigkeitsanteil 16 wird quantitativ und auch in seiner unteren Position in etwa richtig erkannt. Allerdings entspricht die dargestellte Form des Flüssigkeitsanteils 16 nicht der Realität. Das ist aber keine Schwäche des Messverfahrens, sondern der Tatsache geschuldet, dass in diesem Beispiel das Sensormodell noch nicht genau genug implementiert wurde. Die tatsächliche Feldverteilung im Inneren entspricht also noch nicht hinreichend der theoretischen Vorhersage der Simulation.

**Patentansprüche**

1. Kapazitiver Sensor (10) zur Bestimmung der Permittivitätsverteilung in einem Objekt (12), wobei der Sensor (10) mindestens drei Elektroden (14a-d) zur Anbringung an dem Objekt (12), eine mit den Elektroden (14a-d) verbindbare Messeinheit (18, 26) mit mindestens einer astabilen Kippstufe (18a-d) zur Messung von Kapazitäten zwischen Elektroden (14a-d) und eine Auswertungseinheit (24) aufweist, um aus den gemessenen Kapazitäten die Permittivitätsverteilung zu bestimmen, wobei die Messeinheit (18, 26) mindestens einen Schalter (26a-d) aufweist, um wahlweise eine Elektrode (14a-d) mit der astabilen Kippstufe (18a-d) zu verbinden,
   **dadurch gekennzeichnet,**
   **dass** der Schalter (26a-d) jede eine Elektrode (14a-d) wahlweise mit Masse, einer Versorgungsspannung ($V_0$) oder der astabilen Kippstufe (18a-d) verbinden kann, dass die Messeinheit (18, 26) dafür ausgebildet ist, eine Messkapazität aus einer ersten Elektrode (14a-d) und einer zweiten Elektrode (14a-d) zu bilden, indem mit Hilfe des Schalters (26a-d) die erste Elektrode (14a-d) mit der Versorgungsspannung ($V_0$), die zweite Elektrode (14a-d) mit der astabilen Kippstufe (18a-d) und alle übrigen Elektroden (14a-d) mit Masse verbunden werden und dass die Auswertungseinheit (24) dafür ausgebildet ist, mit Hilfe der Messeinheit (18, 26) nacheinander Messkapazitäten aus verschiedenen Paaren von Elektroden (14a-d) zu bilden.

2. Sensor (10) nach Anspruch 1, wobei die Messeinheit (18, 26) je einen Schalter (26a-d) für jede der Elektroden (14a-d) aufweist.

3. Sensor (10) nach einem der vorhergehenden Ansprüche, wobei die Messeinheit (18, 26) eine astabile Kippstufe (18a-d) für jede Elektrode (14a-d) aufweist.

4. Sensor (10) nach einem der vorhergehenden Ansprüche, wobei die Auswertungseinheit (24) dafür ausgebildet ist, mit Hilfe der Messeinheit (18, 26) nacheinander Messkapazitäten aus allen Paaren von Elektroden (14a-d) zu bilden.

**5.** Sensor (10) nach einem der vorhergehenden Ansprüche, wobei das Objekt eine Rohrleitung (12) mit einem darin strömenden Fluid (16, 18) ist.

**6.** Sensor (10) nach Anspruch 5, wobei die Auswertungseinheit (24) dafür ausgebildet ist, aus der Permittivitätsverteilung unterschiedliche Phasen des strömenden Fluids (16, 18) zu bestimmen, insbesondere den Flüssigkeitsanteil (16) in einem strömenden Gas (18).

**7.** Sensor (10) nach Anspruch 5 oder 6, wobei die Auswertungseinheit (24) dafür ausgebildet ist, mindestens zwei der folgenden Zustände zu unterscheiden: das Fluid (16, 18) hat keinen Flüssigkeitsanteil (16), der Flüssigkeitsanteil (16) ist nebelartig verteilt, der Flüssigkeitsanteil (16) strömt am Boden oder der Flüssigkeitsanteil (16) ist an die Innenwand der Rohrleitung (12) gepresst.

**8.** Verfahren zur kapazitiven Bestimmung der Permittivitätsverteilung in einem Objekt (12), insbesondere einer Rohrleitung (12) mit einem darin strömenden Fluid (16, 18), wobei Kapazitäten zwischen mindestens drei an dem Objekt (12) angebrachten Elektroden (14a-d) mit Hilfe einer astabilen Kippstufe (18a-d) gemessen und aus den gemessenen Kapazitäten die Permittivitätsverteilung bestimmt wird, wobei Elektroden (18a-d) zur Messung der Kapazitäten mittels Schalter (26a-d) wahlweise mit der astabilen Kippstufe (18a-d) verbunden werden,
**dadurch gekennzeichnet,**
**dass** der Schalter (26a-d) jede Elektrode (14a-d) wahlweise mit Masse, einer Versorgungsspannung ($V_0$) oder der astabilen Kippstufe (18a-d) verbindet, und dass eine Messkapazität aus einer ersten Elektrode (14a-d) und einer zweiten Elektrode (14a-d) gebildet wird, indem mittels Schalter (26a-d) die erste Elektrode (14a-d) mit der Versorgungsspannung ($V_0$), die zweite Elektrode (14a-d) mit der astabilen Kippstufe (18a-d) und alle übrigen Elektroden (14a-d) mit Masse verbunden werden und dass nacheinander Messkapazitäten aus verschiedenen Paaren von Elektroden (14a-d) gebildet werden.

**Claims**

**1.** A capacitive sensor (10) for determining the permittivity distribution in an object (12), the sensor (10) having at least three electrodes (14a-d) for attachment to the object (12), a measuring unit (18, 26) which can be connected to the electrodes (14a-d) and has at least one astable flip-flop stage (18a-d) for measuring capacitances between electrodes (14a-d), and an evaluation unit (24) for determining the permittivity distribution from the measured capacitances, the measuring unit (18, 26) having at least one switch (26a-d) for selectively connecting an electrode (14a-d) to the astable flip-flop stage (18a-d), **characterized in that** the switch (26a d) can selectively connect each electrode (14a-d) to ground, a supply voltage ($V_0$) or the astable flip-flop stage (18a-d), **in that** the measuring unit (18, 26) is configured to form a measuring capacitance from a first electrode (14a-d) and a second electrode (14a-d) by using the switch (26a-d) to connect the first electrode (14a-d) to the supply voltage ($V_0$), the second electrode (14a-d) to the astable flip-flop stage (18a-d) and all the remaining electrodes (14a d) to ground, and **in that** the evaluation unit (24) is configured to successively form measuring capacitances from different pairs of electrodes (14a d) using the measuring unit (18, 26).

**2.** The sensor (10) according to claim 1,
wherein the measuring unit (18, 26) has a respective switch (26a-d) for each of the electrodes (14a-d).

**3.** The sensor (10) according to any of the preceding claims,
wherein the measuring unit (18, 26) has an astable flip-flop stage (18a-d) for each electrode (14a-d).

**4.** The sensor (10) according to any of the preceding claims,
wherein the evaluation unit (24) is adapted to successively form measuring capacities from all pairs of electrodes (14a d) using the measuring unit (18, 26).

**5.** The sensor (10) according to any of the preceding claims,
wherein the object is a pipeline (12) with a fluid (16, 18) flowing therein.

**6.** The sensor (10) according to claim 5,
wherein the evaluation unit (24) is configured to determine different phases of the flowing fluid (16, 18), in particular the liquid portion (16) in a flowing gas (18), from the permittivity distribution.

**7.** The sensor (10) according to claim 5 or 6,
wherein the evaluation unit (24) is configured to distinguish at least two of the following states: the fluid (16, 18) has no liquid portion (16), the liquid portion (16) is distributed in a mist, the liquid portion (16) flows at the bottom, or the liquid portion (16) is pressed against the inner wall of the pipeline (12).

**8.** A method for capacitively determining the permittivity distribution in an object (12), in particular a pipeline (12) with a fluid (16, 18) flowing therein, wherein capacitances between at least three electrodes (14a-d) attached to the object (12) are measured using an astable flip-flop stage (18a-d) and the permittivity distribution is determined from the measured capacitances, wherein electrodes (18a-d) for measuring the capacitances are selectively connected to the astable flip-flop stage (18a d) by means of a switch (26a-d),
**characterized in that** the switch (26a-d) selectively connects each electrode (14a-d) to ground, a supply voltage ($V_0$) or the astable flip-flop stage (18a-d), and **in that** a measuring capacitance is formed from a first electrode (14a-d) and a second electrode (14a-d) using the switch (26a-d) to connect the first electrode (14a-d) to the supply voltage ($V_0$), the second electrode (14a-d) to the astable flip-flop stage (18a-d) and all the remaining electrodes (14a-d) to ground, and **in that** measuring capacitances are formed successively from different pairs of electrodes (14a-d).

**Revendications**

**1.** Capteur capacitif (10) pour déterminer la répartition de permittivité dans un objet (12), le capteur (10) comprenant au moins trois électrodes (14a - d) destinées à être montées sur l'objet (12), une unité de mesure (18, 26) susceptible d'être reliée aux électrodes (14a - d) et pourvue d'au moins un étage de bascule astable (18a - d) pour mesurer des capacités entre les électrodes (14a - d) et une unité d'évaluation (24), en vue de déterminer la répartition de permittivité à partir des capacités mesurées, l'unité de mesure (18, 26) comprenant au moins un commutateur (26a - d) pour relier au choix une électrode (14a - d) à l'étage de bascule astable (18a - d), **caractérisé en ce que** le commutateur (26a - d) peut relier chaque électrode (14a - d) au choix à la masse, à une tension d'alimentation ($V_0$) ou à l'étage de bascule astable (18a - d), **en ce que** l'unité de mesure (18, 26) est réalisée pour former une capacité de mesure à partir d'une première électrode (14a - d) et d'une seconde électrode (14a - d) en reliant, à l'aide du commutateur (26a - d), la première électrode (14a - d) à la tension d'alimentation ($V_0$), la seconde électrode (14a - d) à l'étage de bascule astable (18a - d) et toutes les autres électrodes (14a - d) à la masse, et **en ce que** l'unité d'évaluation (24) est réalisée pour former successivement des capacités de mesure à partir de différentes paires d'électrodes (14a - d), à l'aide de l'unité de mesure (18, 26).

**2.** Capteur (10) selon la revendication 1,
dans lequel l'unité de mesure (18, 26) comprend un commutateur respectif (26a - d) pour chacune des électrodes (14a - d).

**3.** Capteur (10) selon l'une des revendications précédentes,
dans lequel l'unité de mesure (18, 26) comprend un étage de bascule astable (18a - d) pour chaque électrode (14a - d).

**4.** Capteur (10) selon l'une des revendications précédentes,
dans lequel l'unité d'évaluation (24) est réalisée pour former successivement des capacités de mesure à partir de toutes les paires d'électrodes (14a - d), à l'aide de l'unité de mesure (18, 26).

**5.** Capteur (10) selon l'une des revendications précédentes,
dans lequel l'objet est un conduit tubulaire (12) avec un fluide (16, 18) en écoulement dans celui-ci.

**6.** Capteur (10) selon la revendication 5,
dans lequel l'unité d'évaluation (24) est réalisée pour déterminer différentes phases du fluide en écoulement (16, 18) à partir de la répartition de permittivité, en particulier la part de liquide (16) dans un gaz en écoulement (18).

**7.** Capteur (10) selon la revendication 5 ou 6,
dans lequel l'unité d'évaluation (24) est réalisée pour distinguer au moins deux des états suivants : le fluide (16, 18) n'a pas de part de liquide (16), la part de liquide (16) est répartie de façon nébuleuse, la part de liquide (16) s'écoule au fond, ou la part de liquide (16) est pressée contre la paroi intérieure du conduit tubulaire (12).

**8.** Procédé pour la détermination capacitive de la répartition de permittivité dans un objet (12), en particulier dans un conduit tubulaire (12) avec un fluide (16, 18) en écoulement dans celui-ci,

dans lequel des capacités entre au moins trois électrodes (14a - d) montées sur l'objet (12) sont mesurées à l'aide d'un étage de bascule astable (18a - d), et la répartition de permittivité est déterminée à partir des capacités mesurées, les électrodes (18a - d) étant reliées au choix à l'étage de bascule astable (18a - d) au moyen de commutateurs (26a - d) pour mesurer les capacités,

**caractérisé en ce que**

le commutateur (26a - d) relie chaque électrode (14a - d) au choix à la masse, à une tension d'alimentation ($V_0$) ou à l'étage de bascule astable (18a - d), et **en ce que** une capacité de mesure est formée à partir d'une première électrode (14a - d) et d'une seconde électrode (14a - d), en reliant, à l'aide du commutateur (26a - d), la première électrode (14a - d) à la tension d'alimentation ($V_0$), la seconde électrode (14a - d) à l'étage de bascule astable (18a - d), et toutes les autres électrodes (14a - d) à la masse, et **en ce que** des capacités de mesure sont formées successivement à partir de différentes paires d'électrodes (14a - d).

Figur 1

Figur 2

Figur 3

Figur 4

Figur 5

Figur 6

(a)                    (b)                    (c)                    (d)

Figur 7

**IN DER BESCHREIBUNG AUFGEFÜHRTE DOKUMENTE**

**In der Beschreibung aufgeführte Patentdokumente**

- EP 1521066 A1
- DE 19736178 C1
- US 20140361793 A1

**In der Beschreibung aufgeführte Nicht-Patentliteratur**

- **HUANG, S. M. et al.** Design of sensor electronics for electrical capacitance tomography. *IEE Proceedings G (Circuits, Devices and Systems),* 1992, vol. 139.1, 83-88